# EUROPEAN PATENT SPECIFICATION

(11) **EP 4 307 469 B1**
(45) Date of publication and mention of the grant of the patent: **07.10.2026**
(21) Application number: 22767501.4
(22) Date of filing: 08.03.2022
(51) Int. Cl.: H01Q 1/12, G01J 1/02, G01C 9/00, G01C 21/02, G01S 3/785, G01C 21/00, H01Q 1/24, G01J 1/04, G01J 1/06, G01J 1/42

(54) **SLOPE AND DIRECTION DETECTING APPARATUS AND ANTENNA ASSEMBLY USING SAME**
NEIGUNGS- UND RICHTUNGSERKENNUNGSVORRICHTUNG UND ANTENNENANORDNUNG DAMIT
APPAREIL DE DÉTECTION DE PENTE ET DE DIRECTION ET ENSEMBLE ANTENNE L'UTILISANT

(30) Priority: 11.03.2021 KR 20210032222; 03.03.2022 KR 20220027531
(43) Date of publication of application: 17.01.2024
(73) Proprietor: KMW Inc., Hwaseong-si, Gyeonggi-do 18462 (KR)
(72) Inventor: KIM, In Ho, Yongin-si, Gyeonggi-do 17073 (KR); LEE, Ju Hun, Anyang-si, Gyeonggi-do 14102 (KR); HONG, Young Ji, Hwaseong-si, Gyeonggi-do 18470 (KR); KIM, Gun Woo, Seoul 05338 (KR)
(74) Representative: impuls legal PartG mbB
(86) International application number: PCT/KR2022/003305
(87) International publication number: WO 2022/191605

(56) References cited:
- EP-A1- 3 819 589
- WO-A1-2020/009256
- WO-A1-2021/242208
- WO-A2-2011/126316
- KR-A- 20050 064 651
- KR-A- 20170 003 777
- KR-A- 20180 098 182
- US-A- 4 361 758

## Description

### [Cross-Reference To Related Application]

The present application claims priority to Patent Application No. 10-2021-0032222, filed on March 11, 2021 in Korea, and No. 10-2022-0027531, filed on March 3, 2022 in Korea.

### [Technical Field]

The present disclosure relates to a tilt and direction detecting apparatus and an antenna assembly using the same.

### [Background Art]

The description in this section merely provides background information on the present disclosure and does not necessarily constitute the related art.

In a mobile communication base station, a proper installation position for an antenna is determined depending on the outcome of network design. A directivity angle and tilting angle for an antenna may be appropriately designed in consideration of vertical up/down tilting and horizontal sector directivity angle of an antenna beam. The tilting angle and the directivity angle may be optimized by carrying out a test to adapt the installed antenna to the propagation environment of the site.

Since a radio signal in a 5G 3.5 GHz frequency band has a strong propagation linearity, an antenna needs to be installed with a pre-designed antenna angle of direction to obtain planned service coverage and to enable design and optimization with coherent indicators for later extensions. The higher the frequency band, the more critical it becomes to minimize errors.

The tilting angle and directivity angle of an antenna needs to be re-adjusted according to changes in radio environment. The tilt of a mast where an antenna is installed may be changed, affected by external environments such as strong wind, or clamps for attaching an antenna and a mast may be horizontally misaligned.

Document WO2020/009256 A1 discloses a tilt and direction detecting apparatus comprising a dome structure including a spherical surface and a plurality of optical sensors oriented in different directions from each other and configured to measure the intensity of sunlight.

### [Disclosure]

### [Technical Problem]

A tilt and direction detecting apparatus according to an embodiment can enhance the convenience of maintenance and repair of equipment such as antennas by obtaining a three-dimensional tilt angle for the equipment by using sunlight, and immediately checking whether the current directivity angle of the equipment suits the initial design intent.

A tilt and direction detecting apparatus according to an embodiment makes it possible to dispose a flexible printed circuit including a plurality of optical sensors board on a dome structure.

The aspects of the present disclosure are not limited to the foregoing, and other aspects not mentioned herein will be able to be clearly understood by those skilled in the art from the following description.

### [Technical Solution]

An embodiment of the present disclosure provides a tilt and direction detecting apparatus comprising: a dome structure including a spherical surface; a plurality of optical sensors configured to measure the intensity of sunlight; and a flexible printed circuit board configured to enclose at least a portion of the spherical surface, wherein, in a state in which the flexible printed circuit board is disposed on the spherical surface, the plurality of optical sensors are oriented in different directions from each other.

### [Advantageous Effects]

In accordance with an embodiment, a tilt and direction detecting apparatus provides highly reliable measurements since it uses sunlight, and can be offered at a low price.

In accordance with an embodiment, a tilt and direction detecting apparatus can have better productivity because a flexible printed circuit substrate including a plurality of optical sensors is disposed on a dome structure.

### [Description of Drawings]

FIG. 1 is a perspective view of an antenna assembly according to an embodiment of the present disclosure.
FIG. 2 is a perspective view of a tilt and direction detecting apparatus according to an embodiment of the present disclosure.
FIG. 3 is an exploded perspective view of a tilt and direction detecting apparatus according to an embodiment of the present disclosure.
FIG. 4 is a cross-sectional view of a tilt and direction detecting apparatus according to an embodiment of the present disclosure.
FIG. 5 is a bottom view of a cover member of a tilt and direction detecting apparatus according to an embodiment of the present disclosure.
FIG. 6 is a top view of a flexible printed circuit board of a tilt and direction detecting apparatus according to an embodiment of the present disclosure.

### [Mode for Disclosure]

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout the present specification, when a part 'includes' or 'comprises' a component, the part is meant to further include other components, not to exclude thereof unless specifically stated to the contrary.

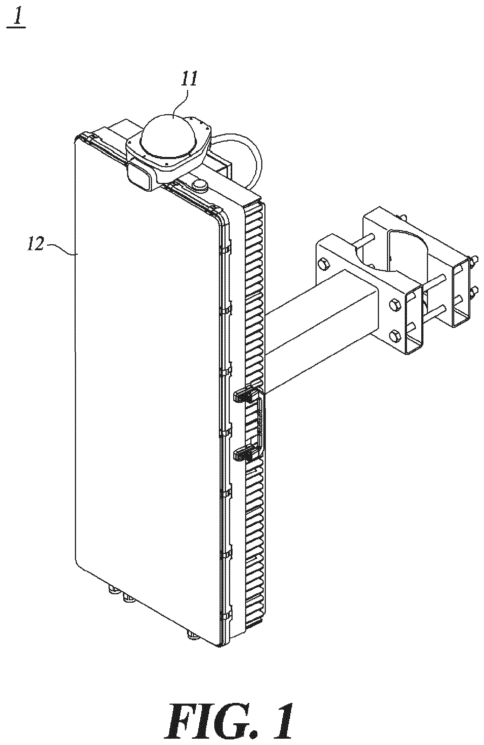

FIG. 1 is a perspective view of an antenna assembly according to an embodiment of the present disclosure.

Referring to FIG. 1, an antenna assembly 1 of the present disclosure may include all or some of a tilt and direction detecting apparatus 11 and an antenna apparatus 12.

The tilt and direction detecting apparatus 11 may be secured to the antenna apparatus 12 and measure, in real time, three-dimensional spatial direction information of the antenna apparatus 12. Based on the three-dimensional spatial direction information, the antenna assembly 1 may remotely monitor and control the direction of the antenna apparatus 12.

The tilt and direction detecting apparatus 11 may include all or some of an IMU (inertial measurement unit) sensor, a plurality of optical sensors, a GPS module, and a camera module.

The IMU sensor may measure the tilt and roll of the antenna apparatus 12. The plurality of optical sensors may measure the angle of incidence of sunlight. The GPS module may measure the altitude and longitude of the current position where the tilt and direction detecting apparatus 11 is installed. Also, the GPS module may provide calendar information on the date and time of receipt of output information. The tilt and direction detecting apparatus 11 may calculate the absolute horizontal direction angle information of the antenna apparatus 12 by using one or more pieces of information measured by the IMU sensor and the GPS module. The camera module may capture a foreground toward which the antenna apparauts 12 where the tilt and direction detecting apparatus 11 is installed is oriented, or may generate image or video data.

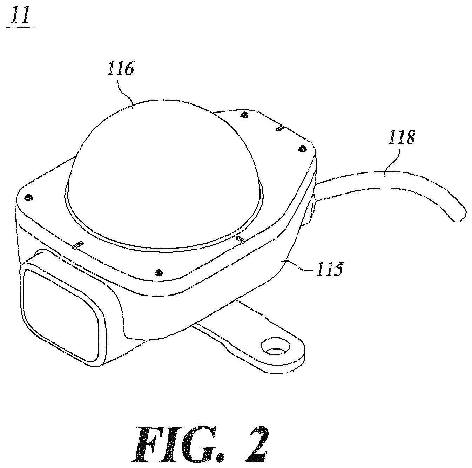

FIG. 2 is a perspective view of a tilt and direction detecting apparatus according to an embodiment of the present disclosure.

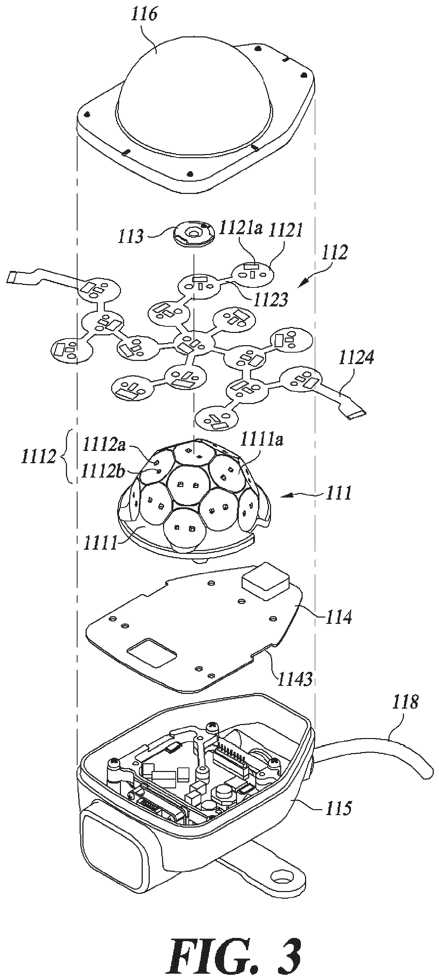

FIG. 3 is an exploded perspective view of a tilt and direction detecting apparatus according to an embodiment of the present disclosure.

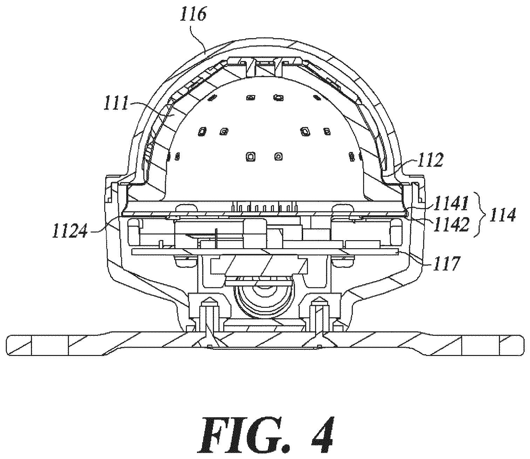

FIG. 4 is a cross-sectional view of a tilt and direction detecting apparatus according to an embodiment of the present disclosure.

Referring to FIGS. 2 to 4, the tilt and direction detecting apparatus 11 may include all or some of a dome structure 111, a flexible printed circuit board (FPCB) 112, a cover member 113, and a main board 114.

The dome structure 111 may include a spherical surface 1111 and a through-hole 1112. The spherical surface 1111 may include a plurality of supporting surfaces 1111a, and a base unit 1121 of the flexible printed circuit board 112 may be disposed on each supporting surface 1111a.

The spherical surface 1111 of the dome structure 111 may be constructed of multiple polygons, for example, circles, triangles, pentagons, hexagons, or a combination thereof. However, the present disclosure is not limited to them, and the spherical surface 1111 of the dome surface 111 may have a curved shape as a whole.

The flexible printed circuit board 112 may enclose at least a portion of the spherical surface 1111 of the dome surface 111. The flexible printed circuit board 112 may include the base unit 1121, and an optical sensor 1121a capable of receiving sunlight may be disposed on the base unit 1121. A structure of the flexible printed circuit board 112 will be described in detail later.

The tilt and direction detecting apparatus 11 of the present disclosure has a technical feature of enhancing the productivity of the tilt and direction detecting apparatus 11 by disposing a plurality of optical sensors 1121a on the dome structure 111, by using the flexible printed circuit board 112. By disposing the flexible printed circuit board 112 in such a way as to enclose the dome structure 111, the plurality of optical sensors 1121a may be easily installed on the plurality of supporting faces 1111a.

As compared with the conventional art in which a unit substrate having an optical sensor module is installed on each supporting surface, the tilt and direction detecting apparatus 11 can be easily assembled, and, as a result, the productivity of the tilt and direction detecting apparatus 11 can be improved.

With the flexible printed circuit board 112 being disposed on the spherical surface 1111, the plurality of optical sensors 1121a may be disposed to face different directions. Each optical sensor 1121a may receive sunlight in a direction in which each optical sensor 1121a is oriented. For example, the optical sensors 1121a may receive sunlight in a direction normal to their corresponding supporting surface 1111a.

The cover member 113 may be disposed on a base unit 1121 which is disposed on a supporting surface 1111a. The cover member 113 may include a light receiving hole 1131 corresponding to an optical sensor 1121a. The light receiving hole 1131 may help the optical sensor 1121a receive only sunlight that is incident in a particular direction. For example, the light receiving hole 1131 may help the optical sensor 1121a receive only sunlight that is incident in a direction normal to the supporting surface 1111a and a direction contiguous to that direction. Also, the light receiving hole 1131 may block sunlight from other directions other than the direction normal to the supporting surface 1111a and the direction contiguous to that direction.

The range of sunlight reception by the light receiving hole 1131 may vary depending on the number of optical sensors 1121a provided in the tilt and direction detecting apparatus 11. For example, if there is a relatively large number of optical sensors 1121a, the light receiving hole 1131 may be designed to receive sunlight in a relatively narrow range or to receive sunlight in a particular direction, e.g., in a direction normal to the supporting surface 1111a, in order to improve the precision of sensing by each optical sensor 1121a. On the other hand, if there is a relatively small number of optical sensors 1121a, the light receiving hole 1131 may be designed to receive sunlight within a relatively wide range, in order to widen the range of sensing by each optical sensor 1121a. The range of sunlight reception by the light receiving hole 1131 may be adjusted by changing the diameter or shape of the light receiving hole 1131.

The main board 114 may calculate the angle of incidence of sunlight from information outputted from the plurality of optical sensors 1121a. The main board 14 may include a first surface 1141 contiguous to the dome structure 111, a second surface 1142 opposite to the first surface 1141, and a through groove 1143.

At least a portion of a second connecting portion 1124 of the flexible printed circuit board 112 may pass through the through groove 1143, and one end of the second connecting portion 1124 of the main board 114.

In the case of a conventional tilt and direction detecting apparatus, a unit substrate having an optical sensor module may be installed on each supporting surface, and power lines extended from each unit substrate may be electrically connected to the first surface of the main board. In this case, the power lines are scattered between an inner surface of the dome structure and the main board, and this may deteriorate the assemblability of the tilt and direction detecting apparatus.

In comparison with this, the tilt and direction detecting apparatus 11 of the present disclosure is capable of improving the assemblability of the tilt and direction detecting apparatus 11, since it is configured such that the second connecting portion 1124 of the flexible printed circuit board 112 is connected to the second surface 1142 of the main board 114.

The tilt and direction detecting apparatus 11 of the present disclosure may further include a housing 115, a protective cap 116, a surge board 117, and a control cable 118.

The housing 115 may form an exterior of the tilt and direction detecting apparatus 11 and have a variety of parts installed in it. The protective cap 116 may be disposed in such a way as to fully enclose the spherical surface 1111 of the dome structure 111. The protective cap 116 may protect internal parts from external forces, and prevent foreign matters from getting inside the tilt and direction detecting apparatus 11. The surge board 117 may be disposed under the main board 114. The surge board 117 may supply electric power to the parts in the tilt and direction detecting apparatus 11. The tilt and direction detecting apparatus 11 may send and receive measurement data and control data by using the control cable 118.

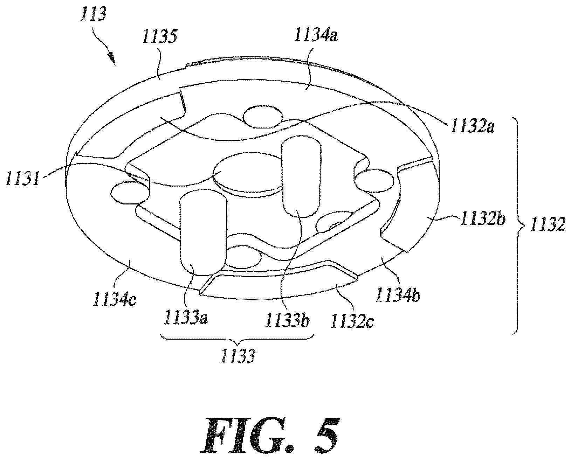

FIG. 5 is a bottom view of a cover member of a tilt and direction detecting apparatus according to an embodiment of the present disclosure.

Referring to FIG. 5, the cover member 113 may include all or some of the light receiving hole 1131, a plurality of supporting portions 1132, a protruding portion 1133, and a cover body 1135.

The light receiving hole 1131 may help the optical sensor 1121a receive only sunlight that is incident in a direction normal to the supporting surface 1111a and a direction contiguous to that direction. Also, the light receiving hole 1131 may block sunlight from other directions other than the direction normal to the supporting surface 1111a and the direction contiguous to that direction. In that case, the optical sensor 1121a may have a wider sensing range.

However, the present disclosure is not limited to this, and the range of sunlight reception by the light receiving hole 1131 may be limited to a particular direction. For example, the light receiving hole 1131 may receive sunlight only in a direction normal to the supporting surface 1111a or in a very narrow range contiguous to that direction.

The plurality of supporting portions 1132 may be configured to extend from one side of the cover member 113 facing the base unit 1121, and such that the cover body 1135 is supported by the supporting surface 1111a of the dome structure 111. The supporting portions 1132 may be laser-fused onto the supporting surface 1111a, but the present disclosure is not limited thereto. For example, the supporting portions 1132 may be secured onto the supporting surface 1111a by using an adhesive or the like.

The plurality of supporting portions 1132 may be spaced apart from one another around the light receiving hole 1131. A space may be formed between two neighboring supporting portions 1132, and a first connecting portion 1123 of the flexible printed circuit board 112 may be configured to pass through the space.

The supporting portions 132 may include a first supporting portion 1132a, a second supporting portion 1132b neighboring the first supporting portion 1132a, and a third supporting portion 1132c neighboring the second supporting portion 1132b. The cover member 113 may be firmly secured onto the supporting surface 1111a as it is supported at three points by using the three supporting portions 1132.

A first space 1134a, which is a space between the first supporting portion 1132a and the second supporting portion 1132, may be larger than a second space 1134b, which is a space between the second supporting portion 1132b and the third supporting portion 1132c. The tilt and direction detecting apparatus 11 of the present disclosure is capable of increasing the degree of freedom with respect to the direction in which the first connecting portion 1123 extends, by using the first space 1134a.

The third supporting portion 1132c and the second supporting portion 1132b may be disposed symmetrically with respect to the first supporting portion 1132a. A third space 1134c, which is a space between the first supporting portion 1132a and the third supporting portion 1132c, may be equal in size to the second space 1134b. however, the present disclosure is not limited to this, and the third supporting portion 1132c and the second supporting portion 1132b may not be symmetrical with respect to the first supporting portion 1132a.

Referring to FIG. 5, although three supporting portions 1132b are depicted, the present disclosure is not limited to this. For example, the cover member 113 may include two or four or more supporting portions 1132.

The protruding portion 1133 may be configured to be fitted to the through-hole 1112 of the dome structure 111. As the protruding portion 1133 is fitted to the through-hole 1112, the cover member 113 may be secured onto the dome structure 111.

The through-hole 1112 may include a first through-hole 1112a and a second through-hole 1112b, and the protruding portion 1133 may include a first protruding portion 1133a having a shape corresponding to the first through-hole 1112a and a second protruding portion 1133b having a shape corresponding to the second through-hole 1112b.

The first through-hole 1112a may have a different size or different shape from the second through-hole 1112b, and therefore the first protruding portion 1133a may have a different size or different shape from the second protruding portion 1133b. For example, the first through-hole 1112a and the first protruding portion 1133a may be larger in size than the second through-hole 1112b and the second protruding portion 1133b, respectively.

Since the first through-hole 1112a and the first protruding portion 1133a have a different size or different shape from the second through-hole 1112b and the second protruding portion 1133b, respectively, the cover member 113 on each supporting surface 111a may be installed in a particular fixed direction.

Once the cover member 113 on each supporting surface 111a is installed in a particular fixed direction, the space between each supporting portion 1132 also may be formed in a particular fixed direction.

The direction of installation of each cover member 113 may vary depending on the shape of the flexible printed circuit board 112. Specifically, it may vary depending on the direction in which the first connecting portion 1123 of the flexible printed circuit board 112 extends. Through this, the degree of freedom in the design of the flexible printed circuit board 112 according to an embodiment of the present disclosure can be further increased.

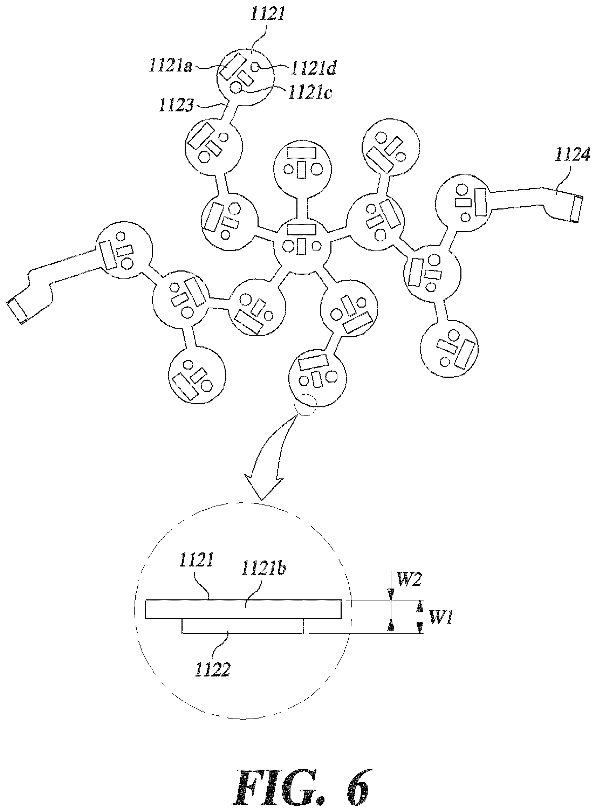

FIG. 6 is a top view of a flexible printed circuit board of a tilt and direction detecting apparatus according to an embodiment of the present disclosure.

Referring to FIG. 6, the flexible printed circuit board 112 of the tilt and direction detecting apparatus 11 of the present disclosure may include a plurality of base units 1121, a plurality of first connecting portions 1123, and a plurality of second connecting portions 1124.

The base units 1121 each may include an optical sensor 1121a, a circuit portion 1121b where the optical sensor 1121a is disposed, and a reinforcing board 112 disposed under the circuit portion 1121b. The reinforcing board 1122 may reinforce the rigidity of the circuit portion 1121b by thickening an area of the flexible printed circuit board 112 where the circuit portion 1121b is formed. The reinforcing board 1122 may minimize the problem of deformation of or damage to the circuit portion 1121b caused by an external force or the like, and also may minimize the problem of damage to the optical sensor 1121a, etc. disposed on the circuit portion.

Each of the plurality of base units 1121 may be disposed on each of the plurality of supporting surfaces 1111a. Each of the plurality of optical sensors 1121a may be disposed on each of the plurality of base units 1121. For example, the plurality of optical sensors 1121a may be disposed on the circuit portions 1121b of the base units 1121.

The base units 1121 may be relatively larger in thickness than the first connecting portions 1123 since they reinforce the rigidity of the circuit portions 1121b by using the reinforcing board 1122. Thus, it is possible to minimize the problem of damage to the optical sensors 1121a disposed on the base units 1121 caused by unintentional bending of the base units 1121 by an external force or the like.

The reinforcing board 1122 may not be disposed on the first connecting portions 1123. Thus, the first connecting portions 1123 may have a second thickness W2 which is smaller than a first thickness W1 of the base units 1121. Since the first connecting portions 1123 may be flexibly deformed due to their relatively small thickness, the flexible printed circuit board 112 may be disposed more easily on the dome structure 111.

The circuit portion 1121b may include polyimide which is a typical material of the flexible printed circuit board 112. However, the present disclosure is not limited to this, and the circuit portion 1121b may include other materials.

The reinforcing board 1122 may include at least one of PET, glass epoxy, and polyimide. However, the present disclosure is not limited to this, and the reinforcing board 1122 may include other materials.

Meanwhile, although FIG. 6 illustrates sixteen base units 1121, this is merely an illustration for convenience of explanation, and the number of base units 1121 of the present disclosure is not limited to sixteen. Thus, the flexible printed circuit board 112 according to the present disclosure may include more or fewer than sixteen base unit 1121. In this case, the number of optical sensors 1121a disposed on the base units 1121 or the number of supporting surfaces 1111a on the dome structure 111 may vary depending on the number of base units 1121.

The first connecting portions 1123 each may connect two neighboring base units 1121 among the plurality of base units 1121. Since the first connecting portions 1123 have no reinforcing board 1122 unlike the base units 1121, they may have a relatively smaller thickness than the base units 1121. Thus, the first connecting portions 1123 may be flexibly deformed, and, as a result, the flexible printed circuit board 112 may enclose the spherical surface of the dome structure 111 more easily.

The second connecting portions 1124 may electrically connect the plurality of optical sensors 1121a and the main board 114. The second connecting portions 1124 may include a signal line, a power supply line, etc. Also, a terminal or connector to be electrically connected to the main board 114 may be provided at one end of the second connecting portions 1124.

The flexible printed circuit board 112 including the base units 1121, the reinforcing board 1122, the first connecting portions 1123, and the second connecting portions 1124 may be formed as a single body. Thus, the arrangement of power lines for feeding or supplying power to the plurality of optical sensors 1121a may be simplified.

The base units 1121 may include a mounting hole. The protruding portion 1133 formed on the cover member 113 may pass through the mounting hole. If the protruding portion 1133 includes a first protruding portion 1133a and a second protruding portion 1133b that are different in size or in shape, the mounting hole may include a first mounting hole 1121c corresponding to the first protruding portion 1133a and a second mounting hole 1121d corresponding to the second protruding portion 1133b. When the cover member 113 is attached to a supporting surface 1111a, the first protruding portion 1133a may pass through the first mounting hole 1121c, and the second protruding portion 1133b may pass through the second mounting hole 1121d.

For example, when the cover member 113 is attached to a supporting surface 1111a, the first protruding portion 1133a may pass through the first mounting hole 1121c of the base unit 1121 and the first through-hole 1112a of the supporting surface 1111a, and the second protruding portion 1133b may pass through the second mounting hole 1121d of the base unit 1121 and the second through-hole 1112b of the supporting surface 1111a.

Meanwhile, although FIG. 6 illustrates one flexible printed circuit board 112 disposed on the spherical surface 1111 of the dome structure 111, the present disclosure is not limited to this. For example, a plurality of flexible printed circuits 112 may be disposed on the spherical surface 1111 of the dome structure 111. In this case, a plurality of optical sensors 1121a may be disposed on the plurality of flexible printed circuits 112 in a distributed manner.

In addition, the shape of the flexible printed circuit board 112 depicted in FIG. 6 is merely an example for convenience of explanation, and the flexible printed circuit board 112 of the present disclosure may have other shapes than the one in the embodiment depicted in FIG. 6.

Although exemplary embodiments of the present disclosure have been described for illustrative purposes, those having ordinary skill in the art will appreciate that various modifications, additions, and substitutions are possible, without departing from the scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments.

## Claims

1. A tilt and direction detecting apparatus (11) comprising:
a dome structure (111) including a spherical surface (1111);
a plurality of optical sensors (1121a) configured to measure the intensity of sunlight; and
**characterized in that** the tilt and direction detecting apparatus (11) further comprises
a flexible printed circuit board (112) including the plurality of optical sensors (1121a), wherein the flexible printed circuit board (112) is configured to enclose at least a portion of the spherical surface (1111),
and wherein the flexible printed circuit board (112) is disposed on the spherical surface (1111) such that the plurality of optical sensors (1121a) are oriented in different directions from each other.

2. The tilt and direction detecting apparatus (11) of claim 1, wherein the flexible printed circuit board (112) includes a plurality of base units (1121) and a plurality of first connecting portions (1123) connecting two neighboring base units (1121) among the plurality of base units (1121).

3. The tilt and direction detecting apparatus (11) of claim 2, wherein the flexible printed circuit board (112) including the plurality of base units (1121) and the plurality of first connecting portions (1123) is formed as a single body.

4. The tilt and direction detecting apparatus (11) of claim 2, wherein the thickness of the base units (1121) is larger than the thickness of the first connecting portions (1123).

5. The tilt and direction detecting apparatus (11) of claim 2, wherein the spherical surface (1111) includes a plurality of supporting surfaces (1111a), and each of the plurality of base units (1121) is disposed on each of the plurality of supporting surfaces (1111a).

6. The tilt and direction detecting apparatus (11) of claim 5, further comprising a plurality of cover members disposed on the plurality of base units (1121), respectively,
wherein the cover members each include a light receiving hole (1131) corresponding to each of the optical sensors (1121a).

7. The tilt and direction detecting apparatus (11) of claim 6, wherein either the dome structure (111) or the cover member (113) includes a through-hole (1112), and the other one includes a protruding portion (1133) capable of being fitted to the through-hole (1112).

8. The tilt and direction detecting apparatus (11) of claim 7, wherein the through-hole (1112) includes a first hole and a second hole, and the protruding portion (1133) includes a first protruding portion (1133a) having a shape corresponding to the first hole and a second protruding portion (1133b) having a shape corresponding to the second hole.

9. The tilt and direction detecting apparatus (11) of claim 8, wherein the first hole configures in that at least one of size and shape is different from the second hole.

10. The tilt and direction detecting apparatus (11) of claim 6, wherein the cover members each include:
a cover body (1135); and
a plurality of supporting portions (132, 1132) configured to support the cover body (1135), that extended from one side of the cover member (113) facing the base unit (1121),
wherein each of the plurality of supporting portions (132, 1132) is spaced apart from one another around the light receiving hole (1131).

11. The tilt and direction detecting apparatus (11) of claim 10, wherein the plurality of supporting portions (132, 1132) include a first supporting portion (1132a), a second supporting portion (1132, 1132b) neighboring the first supporting portion (1132a), and a third supporting portion (1132c) neighboring the second supporting portion (1132, 1132b),
wherein a first space (1134a), which is a space between the first supporting portion (1132a) and the second supporting portion (1132, 1132b), is larger than a second space (1134b), which is a space between the second supporting portion (1132, 1132b) and the third supporting portion (1132c).

12. The tilt and direction detecting apparatus (11) of claim 10, wherein the supporting portions (132, 1132) are laser-fused onto the supporting surface (111a, 1111a).

13. The tilt and direction detecting apparatus (11) of claim 1, further comprising a main board (14, 114) that is configured to calculate the angle of incidence of sunlight from information outputted from the plurality of optical sensors (1121a), and that includes a first surface (1141) contiguous to the dome structure (111) and a second surface (1142) opposite to the first surface (1141),
wherein the flexible printed circuit board (112) further includes a second connecting portion (1124) for electrically connecting the plurality of optical sensors (1121a) and the main board (14, 114),
wherein one end of the second connecting portion (1124) is connected to the second surface (1142).

14. The tilt and direction detecting apparatus (11) of claim 13, wherein the main board (14, 114) further includes a through groove (1143), and at least a portion of the second connecting portion (1124) is configured to pass through the through groove (1143).

15. An antenna assembly (1) comprising a tilt and direction detecting apparatus (11) according to one of claims 1 to 14 and an antenna apparatus (12),
wherein the tilt and direction detecting apparatus (11) is installed on the antenna apparatus (12).

## Patentansprüche

1. Vorrichtung (11) zur Erfassung von Neigung und Richtung, umfassend:
eine Kuppelstruktur (111) mit einer sphärischen Oberfläche (1111);
eine Vielzahl von optischen Sensoren (1121a), die zur Messung der Intensität des Sonnenlichts ausgelegt sind; und **dadurch gekennzeichnet, dass** die Vorrichtung (11) zur Erfassung von Neigung und Richtung ferner umfasst
eine flexible Leiterplatte (112) mit der Vielzahl von optischen Sensoren (1121a), wobei die flexible Leiterplatte (112) so ausgebildet ist, dass sie zumindest einen Teil der Kugeloberfläche (1111) umschließt,
und wobei die flexible Leiterplatte (112) so auf der Kugeloberfläche (1111) angeordnet ist, dass die mehreren optischen Sensoren (1121a) in voneinander unterschiedlichen Richtungen ausgerichtet sind.

2. Neigungs- und Richtungserfassungsvorrichtung (11) nach Anspruch 1, wobei die flexible Leiterplatte (112) eine Vielzahl von Basiseinheiten (1121) und eine Vielzahl von ersten Verbindungsabschnitten (1123) umfasst, die jeweils zwei benachbarte Basiseinheiten (1121) aus der Vielzahl von Basiseinheiten (1121) miteinander verbinden.

3. Neigungs- und Richtungserfassungsvorrichtung (11) nach Anspruch 2, wobei die flexible Leiterplatte (112), die die mehreren Basiseinheiten (1121) und die mehreren ersten Verbindungsabschnitte (1123) umfasst, als ein einziger Körper ausgebildet ist.

4. Neigungs- und Richtungserfassungsvorrichtung (11) nach Anspruch 2, wobei die Dicke der Basiseinheiten (1121) größer ist als die Dicke der ersten Verbindungsabschnitte (1123).

5. Neigungs- und Richtungserfassungsvorrichtung (11) nach Anspruch 2, wobei die Kugeloberfläche (1111) eine Vielzahl von Auflageflächen (1111a) umfasst und jede der Vielzahl von Basiseinheiten (1121) auf jeder der Vielzahl von Auflageflächen (1111a) angeordnet ist.

6. Neigungs- und Richtungserfassungsvorrichtung (11) nach Anspruch 5, die ferner eine Vielzahl von Abdeckelementen umfasst, die jeweils auf den Basiseinheiten (1121) angeordnet sind,
wobei die Abdeckelemente jeweils eine Lichtempfangsöffnung (1131) aufweisen, die jedem der optischen Sensoren (1121a) entspricht.

7. Neigungs- und Richtungserfassungsvorrichtung (11) nach Anspruch 6, wobei entweder die Kuppelstruktur (111) oder das Abdeckelement (113) ein Durchgangsloch (1112) aufweist und das jeweils andere Element einen Vorsprung (1133) aufweist, der in das Durchgangsloch (1112) eingepasst werden kann.

8. Neigungs- und Richtungserfassungsvorrichtung (11) nach Anspruch 7, wobei die Durchgangsbohrung (1112) eine erste Bohrung und eine zweite Bohrung umfasst und der Vorsprung (1133) einen ersten Vorsprung (1133a) mit einer dem ersten Loch entsprechenden Form und einen zweiten Vorsprung (1133b) mit einer dem zweiten Loch entsprechenden Form umfasst.

9. Neigungs- und Richtungserfassungsvorrichtung (11) nach Anspruch 8, wobei das erste Loch so ausgebildet ist, dass sich zumindest entweder seine Größe oder seine Form von der des zweiten Lochs unterscheidet.

10. Neigungs- und Richtungserfassungsvorrichtung (11) nach Anspruch 6, wobei die Abdeckelemente jeweils umfassen:
einen Abdeckkörper (1135); und
eine Vielzahl von Stützabschnitten (132, 1132), die so ausgebildet sind, dass sie den Abdeckkörper (1135) stützen, und die sich von einer der der Basiseinheit (1121) zugewandten Seite des Abdeckelements (113) erstrecken,
wobei die mehreren Stützabschnitte (132, 1132) um die Lichtempfangsöffnung (1131) herum voneinander beabstandet sind.

11. Neigungs- und Richtungserfassungsvorrichtung (11) nach Anspruch 10, wobei die mehreren Stützabschnitte (132, 1132) einen ersten Stützabschnitt (1132a), einen zweiten Stützabschnitt (1132, 1132b), der an den ersten Stützabschnitt (1132a) angrenzt, sowie einen dritten Stützabschnitt (1132c), der an den zweiten Stützabschnitt (1132, 1132b) angrenzt,
wobei ein erster Zwischenraum (1134a), der sich zwischen dem ersten Stützabschnitt (1132a) und dem zweiten Stützabschnitt (1132, 1132b) befindet, größer ist als ein zweiter Zwischenraum (1134b), der sich zwischen dem zweiten Stützabschnitt (1132, 1132b) und dem dritten Stützabschnitt (1132c) verläuft.

12. Neigungs- und Richtungserfassungsvorrichtung (11) nach Anspruch 10, wobei die Stützabschnitte (132, 1132) mittels Laserschmelzverfahren auf die Stützfläche (111a, 1111a) aufgebracht sind.

13. Neigungs- und Richtungserfassungsvorrichtung (11) nach Anspruch 1, die ferner eine Hauptplatine (14, 114) umfasst, die so konfiguriert ist, dass sie den Einfallswinkel des Sonnenlichts aus den von den mehreren optischen Sensoren (1121a) ausgegebenen Informationen berechnet, und die eine an die Kuppelstruktur (111) angrenzende erste Oberfläche (1141) sowie eine der ersten Oberfläche (1141) gegenüberliegende zweite Oberfläche (1142) umfasst,
wobei die flexible Leiterplatte (112) ferner einen zweiten Verbindungsabschnitt (1124) zum elektrischen Verbinden der mehreren optischen Sensoren (1121a) mit der Hauptplatine (14, 114) umfasst,
wobei ein Ende des zweiten Verbindungsabschnitts (1124) mit der zweiten Oberfläche (1142) verbunden ist.

14. Neigungs- und Richtungserfassungsvorrichtung (11) nach Anspruch 13, wobei die Hauptplatine (14, 114) ferner eine Durchgangsnut (1143) umfasst und zumindest ein Abschnitt des zweiten Verbindungsabschnitts (1124) so ausgebildet ist, dass er durch die Durchgangsnut (1143) verläuft.

15. Antennenbaugruppe (1), umfassend eine Neigungs- und Richtungserfassungsvorrichtung (11) gemäß einem der Ansprüche 1 bis 14 und eine Antennenvorrichtung (12),
wobei die Neigungs- und Richtungserfassungsvorrichtung (11) an der Antennenvorrichtung (12) angebracht ist.

## Revendications

1. Dispositif de détection d'inclinaison et de direction (11) comprenant :
une structure en dôme (111) comportant une surface sphérique (1111) ;
une pluralité de capteurs optiques (1121a) configurés pour mesurer l'intensité de la lumière solaire ; et **caractérisé en ce que** le dispositif de détection d'inclinaison et de direction (11) comprend en outre
une carte de circuit imprimé flexible (112) comportant ladite pluralité de capteurs optiques (1121a), dans lequel la carte de circuit imprimé flexible (112) est configurée pour entourer au moins une partie de la surface sphérique (1111),
et dans lequel la carte de circuit imprimé flexible (112) est disposée sur la surface sphérique (1111) de telle sorte que la pluralité de capteurs optiques (1121a) soient orientés dans des directions différentes les uns des autres.

2. Dispositif de détection d'inclinaison et de direction (11) selon la revendication 1, dans lequel la carte de circuit imprimé flexible (112) comprend une pluralité d'unités de base (1121) et une pluralité de premières parties de connexion (1123) reliant deux unités de base voisines (1121) parmi la pluralité d'unités de base (1121).

3. Dispositif de détection d'inclinaison et de direction (11) selon la revendication 2, dans lequel la carte de circuit imprimé flexible (112) comprenant la pluralité d'unités de base (1121) et la pluralité de premières parties de connexion (1123) est formée d'un seul tenant.

4. Dispositif de détection d'inclinaison et de direction (11) selon la revendication 2, dans lequel l'épaisseur des unités de base (1121) est supérieure à l'épaisseur des premières parties de connexion (1123).

5. Dispositif de détection d'inclinaison et de direction (11) selon la revendication 2, dans lequel la surface sphérique (1111) comprend une pluralité de surfaces d'appui (1111a), et chacune des unités de base (1121) est disposée sur chacune des surfaces d'appui (1111a).

6. Dispositif de détection d'inclinaison et de direction (11) selon la revendication 5, comprenant en outre une pluralité d'éléments de recouvrement disposés respectivement sur la pluralité d'unités de base (1121),
dans lequel les éléments de recouvrement comprennent chacun un trou de réception de lumière (1131) correspondant à chacun des capteurs optiques (1121a).

7. Dispositif de détection d'inclinaison et de direction (11) selon la revendication 6, dans lequel soit la structure en dôme (111), soit l'élément de recouvrement (113) comprend un trou traversant (1112), et l'autre comprend une partie en saillie (1133) pouvant s'emboîter dans le trou traversant (1112).

8. Appareil de détection d'inclinaison et de direction (11) selon la revendication 7, dans lequel le trou traversant (1112) comprend un premier trou et un deuxième trou, et la partie en saillie (1133) comprend une première partie en saillie (1133a) ayant une forme correspondant au premier trou et une deuxième partie en saillie (1133b) ayant une forme correspondant au deuxième trou.

9. Dispositif de détection d'inclinaison et de direction (11) selon la revendication 8, dans lequel le premier trou est configuré de telle sorte qu'au moins l'une de ses dimensions et de sa forme diffère de celles du deuxième trou.

10. Dispositif de détection d'inclinaison et de direction (11) selon la revendication 6, dans lequel les éléments de couvercle comprennent chacun :
un corps de couvercle (1135) ; et
une pluralité de parties de support (132, 1132) configurées pour supporter le corps de couvercle (1135), qui s'étendent depuis un côté de l'élément de couvercle (113) faisant face à l'unité de base (1121),
chacune desdites parties de support (132, 1132) étant espacée des autres autour de l'orifice de réception de lumière (1131).

11. Dispositif de détection d'inclinaison et de direction (11) selon la revendication 10, dans lequel la pluralité de parties de support (132, 1132) comprend une première partie de support (1132a), une deuxième partie de support (1132, 1132b) adjacente à la première partie de support (1132a), et une troisième partie de support (1132c) adjacente à la deuxième partie de support (1132, 1132b),
dans lequel un premier espace (1134a), qui est l'espace entre la première partie de support (1132a) et la deuxième partie de support (1132, 1132b), est plus grand qu'un deuxième espace (1134b), qui est l'espace entre la deuxième partie de support (1132, 1132b) et la troisième partie de support (1132c).

12. Dispositif de détection d'inclinaison et de direction (11) selon la revendication 10, dans lequel les parties de support (132, 1132) sont fixées par fusion au laser sur la surface de support (111a, 1111a).

13. Appareil de détection d'inclinaison et de direction (11) selon la revendication 1, comprenant en outre une carte mère (14, 114) qui est configurée pour calculer l'angle d'incidence de la lumière solaire à partir des informations fournies par la pluralité de capteurs optiques (1121a), et qui comprend une première surface (1141) contiguë à la structure en dôme (111) et une deuxième surface (1142) opposée à la première surface (1141),
dans lequel la carte de circuit imprimé flexible (112) comprend en outre une deuxième partie de connexion (1124) destinée à relier électriquement la pluralité de capteurs optiques (1121a) et la carte mère (14, 114),
dans lequel une extrémité de la deuxième partie de connexion (1124) est reliée à la deuxième surface (1142).

14. Dispositif de détection d'inclinaison et de direction (11) selon la revendication 13, dans lequel la carte principale (14, 114) comprend en outre une rainure traversante (1143), et au moins une partie de la deuxième partie de connexion (1124) est configurée pour passer à travers la rainure traversante (1143).

15. Ensemble d'antenne (1) comprenant un dispositif de détection d'inclinaison et de direction (11) selon l'une des revendications 1 à 14 et un dispositif d'antenne (12),
dans lequel le dispositif de détection d'inclinaison et de direction (11) est installé sur le dispositif d'antenne (12).
